# EUROPEAN PATENT SPECIFICATION

(11) **EP 3 097 484 B1**
(45) Date of publication and mention of the grant of the patent: **06.02.2019**
(21) Application number: 15761535.2
(22) Date of filing: 12.03.2015
(51) Int. Cl.: E21B 41/00, E21B 47/06

(54) **EFFICIENT AND ROBUST COMPOSITIONAL RESERVOIR SIMULATION USING A FAST PHASE ENVELOPE**
EFFIZIENTE UND ROBUSTE KOMPOSITRESERVOIRSIMULATION UNTER VERWENDUNG EINER SCHNELLER PHASENHÜLLKURVE
SIMULATION DE RÉSERVOIR COMPOSITE EFFICACE ET ROBUSTE À L'AIDE D'UNE ENVELOPPE DE PHASE RAPIDE

(30) Priority: 12.03.2014 US 201461951823 P
(43) Date of publication of application: 30.11.2016
(73) Proprietor: Landmark Graphics Corporation, Houston, Texas 77042 (US)
(72) Inventor: WONG, Terry, Houston, Texas 77077 (US)
(74) Representative: Patel, Nikesh
(86) International application number: PCT/US2015/020295
(87) International publication number: WO 2015/138807

(56) References cited:
- WO-A1-2004/049216
- WO-A1-2009/073520
- US-A1- 2007 112 547
- US-A1- 2007 119 244
- US-A1- 2007 119 244
- US-A1- 2013 096 897

## Description

### CROSS-REFERENCE TO RELATED APPLICATIONS

The present application claims the benefit of U.S. Provisional Patent Application No. 61/951,823, filed on March 12, 2014, titled "Efficient and Robust Compositional Reservoir Simulation Using a Fast Phase Envelope Generation Procedure".

### FIELD OF THE DISCLOSURE

The present disclosure relates generally to the recovery of subterranean deposits and more specifically to numerical techniques for simulating phase states of subterranean hydrocarbon deposits in a petroleum reservoir.

### BACKGROUND

Petroleum reservoirs are represented by numerical simulation models. In one common type of simulation, known as compositional simulation, an equation of state (EOS) is used to establish the state of the fluids in place in the reservoir model. In this simulation model, the volume of the reservoir is divided into discrete grid-blocks. Within each grid-block, thermodynamic equilibrium is assumed, and the conditions of each grid-block must be established. This means that the average temperature, pressure, and amount of mass of each individual component must be established. Additionally, other thermodynamic information may be desired for simulation purposes, such as the saturation pressure (i.e., the pressure at which a single phase system becomes a two-phase system), the amount of liquid hydrocarbon and vapor hydrocarbon phase, and the composition of each of these phases.

Given a fluid with a particular overall composition at a given temperature and pressure, a phase envelope can be generated for delineating regions of different phase states for the fluid. For example, one side of the envelope may represent a single phase liquid phase state of the fluid, e.g., in a region where the given temperature is below a critical temperature. Another side of the envelope may represent a single phase vapor state of the fluid, in a different region where the temperatures are above the critical temperature. Within the two-phase envelope, the state of the fluid may be a two-phase liquid. The pressure corresponding to a particular temperature on the phase envelope boundary is known as the saturation pressure.

Accordingly, the phase envelope provides a comprehensive description about the phase state of a fluid, and it would be desirable to calculate it for any given composition. However, conventional phase envelope techniques may be too computationally expensive and inefficient to use in a petroleum reservoir simulation, in which the phase state must be established in every single grid-block (of which there may be millions) and for every single time-step (of which there may be thousands). For instance, one technique that has been in common usage prior to circa 1995 is used to establish the initial equilibrium by the calculation of the saturation pressure and the comparison of the saturation pressure with the grid-block pressure. However, this technique lacks robustness and is also guaranteed to fail above the maximum temperature, known as the "cricondentherm," at which two phases can coexist. Even when it is successful, near the critical point, many hundreds of iterations of the numerical simulation may be required for convergence.

Another technique that is the most commonly used today in commercial reservoir simulators involves determining the fluid state having the lowest Gibbs free energy. Such a technique is most commonly used to find the tangent plane distance. Alternatively, the Gibbs free energy may be treated as the objective of a minimization problem. In either case, the technique is mathematically difficult, is not necessarily robust, and may require many iterations to converge. Additionally, while the Gibbs free energy approach are more robust around the critical point than the saturation pressure approach, the Gibbs approach does not yield as much information as the saturation pressure calculation, which can be used to establish that the single phase fluid is a liquid or a vapor. While a Gibbs free energy approach may establish that a fluid is in a single phase state, it is indeterminate as to which single phase state, i.e., whether the fluid is a liquid or a vapor.

Other approaches involving multiple flash calculations at increasing pressure levels may be computationally expensive and inefficient near the critical point, as many flash calculations, all potentially requiring hundreds of iterations, may be required.

US 2007/119244 A1 discloses a method and system for investigating a hydrocarbon-bearing geological formation traversed by a borehole. To characterize a fluid associated with the underground geological formation, a fluid sample is obtained and a chemical composition and a thermophysical property of the fluid sample are measured in a borehole. A mathematical method is selected to represent the fluid, based on at least one of the chemical composition or the thermophysical property, and a parameter of the model is adjusted based on at least one of the chemical composition or the thermophysical property. The method then determines a property of the fluid based on the adjusted model.

WO 2004/049216 A1 discloses a method and system for controlling the coupling of multi-platform reservoir and network simulators, including synchronising the advancement through time of the simulators and converting the hydrocarbon fluid streams between different sets of pseudo-components in the simulators. The document discloses integrated reservoir and surface facility network simulations, for oilfield development and optimization, and acknowledges that integrated models can be used to analyse the pressure interaction between a reservoir and a constrained surface facility network, or to predict the behaviour of fields that share a common surface facility but may have different fluid compositions. The document discloses a general purpose multi-platform reservoir and network coupling controller that communicates with a selection of reservoir simulators and surface network simulators via an open message-passing interface, for use in managing the balancing of the reservoirs and surface networks and synchronizing their advancement. The controller applies production and injection constraints and converts the hydrocarbon fluid streams between the different sets of pseudo-components using in the simulation models.

### SUMMARY

A first aspect of the invention provides a computer-implemented method for simulating different phase states of fluids in a reservoir, for use in hydrocarbon recovery, according to claim 1 of this patent specification.

A second aspect of the invention provides a system for simulating different phase states of fluids in a reservoir, according to claim 8 of this patent specification.

A third aspect of the invention provides a computer-readable storage medium according to claim 14 of this patent specification.

### BRIEF DESCRIPTION OF THE DRAWINGS

Illustrative embodiments of the present disclosure are described in detail below with reference to the attached drawing figures.
FIGS. 1A and IB illustrate examples of production wells suitable for hydrocarbon production and exploration from a petroleum reservoir.
FIG. 2 is a block diagram of an exemplary system for simulating fluid states in a reservoir.
FIG. 3 is a diagram illustrating an example of a phase envelope representing an overall composition of fluids in a reservoir.
FIG. 4 is a process flowchart of an exemplary method of using a fast phase envelope for simulating different phase states of fluids in a reservoir.
FIG. 5 is a block diagram of an exemplary computer system in which embodiments of the present disclosure may be implemented.

The illustrated figures are only exemplary and are not intended to assert or imply any limitation with regard to the environment, architecture, design, or process in which different embodiments may be implemented.

### DESCRIPTION OF ILLUSTRATIVE EMBODIMENTS

Embodiments of the present disclosure relate to using a fast phase envelope for simulating different phase states of fluids in a reservoir. While the present disclosure is described herein with reference to illustrative embodiments for particular applications, it should be understood that embodiments are not limited thereto. The description of the present disclosure has been presented for purposes of illustration and description, but is not intended to be exhaustive or limited to the embodiments in the form disclosed. Many modifications and variations will be apparent to those of ordinary skill in the art without departing from the scope of the disclosure. The illustrative embodiments described herein are provided to explain the principles of the disclosure and the practical application thereof, and to enable others of ordinary skill in the art to understand that the disclosed embodiments may be modified as desired for a particular implementation or use. The scope of the claims is intended to broadly cover the disclosed embodiments and any such modification. Any actual data values listed in the detailed description are provided for
illustrative purposes only and embodiments of the present disclosure are not intended to be limited thereto. Thus, the operational behavior of embodiments will be described with the understanding that modifications and variations of the embodiments are possible, given the level of detail presented herein.

In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, the singular forms "a", "an" and "the" are intended to include the plural forms as well, unless the context clearly indicates otherwise. It will be further understood that the terms "comprise" and/or "comprising," when used in this specification and/or the claims, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

The disclosure may repeat reference numerals and/or letters in the various examples or Figures. This repetition is for the purpose of simplicity and clarity and does not in itself dictate a relationship between the various embodiments and/or configurations discussed. Further, spatially relative terms, such as beneath, below, lower, above, upper, uphole, downhole, upstream, downstream, and the like, may be used herein for ease of description to describe one element or feature's relationship to another element(s) or feature(s) as illustrated, the upward direction being toward the top of the corresponding figure and the downward direction being toward the bottom of the corresponding figure, the uphole direction being toward the surface of the wellbore, the downhole direction being toward the toe of the wellbore. Unless otherwise stated, the spatially relative terms are intended to encompass different orientations of the apparatus in use or operation in addition to the orientation depicted in the Figures. For example, if an apparatus in the Figures is turned over, elements described as being "below" or "beneath" other elements or features would then be oriented "above" the other elements or features. Thus, the exemplary term "below" can encompass both an orientation of above and below. The apparatus may be otherwise oriented (rotated 90 degrees or at other orientations) and the spatially relative descriptors used herein may likewise be interpreted accordingly.

Moreover, even though a Figure may depict a horizontal wellbore or a vertical wellbore, unless indicated otherwise, it should be understood by those skilled in the art that the apparatus according to the present disclosure is equally well suited for use in wellbores having other orientations including vertical wellbores, slanted wellbores, multilateral wellbores or the like. Likewise, unless otherwise noted, even though a Figure may depict an onshore operation, it should be understood by those skilled in the art that the apparatus according to the present disclosure is equally well suited for use in offshore operations. Further, unless otherwise noted, even though a Figure may depict a cased hole, it should be understood by those skilled in the art that the apparatus according to the present disclosure is equally well suited for use in open hole operations.

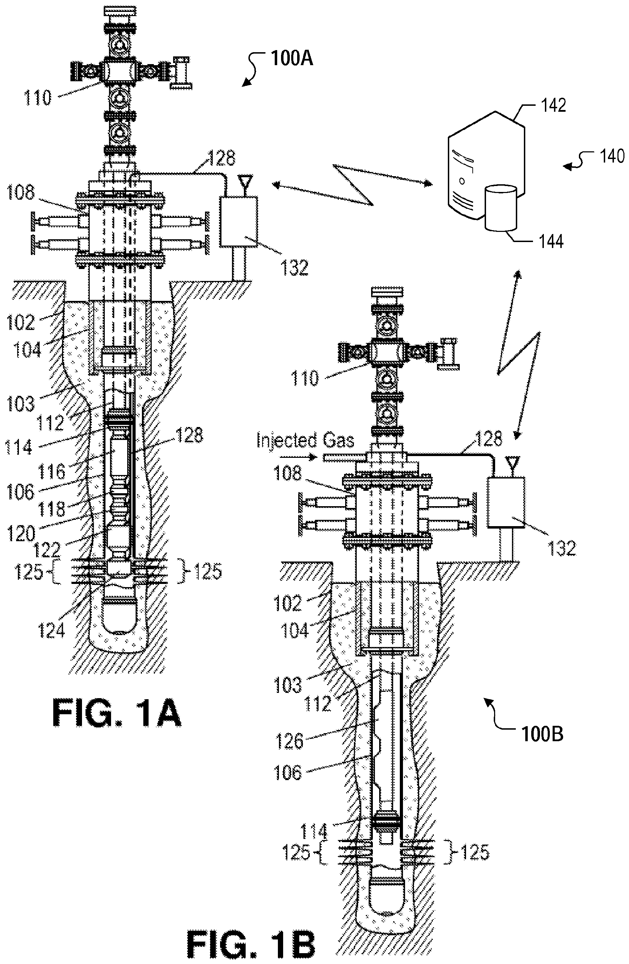

Illustrative embodiments and related methodologies of the present disclosure are described below in reference to FIGS. 1-5 as they might be employed, for example, in a computer system for performing reservoir simulations based on one or more numerical simulation models. Other features and advantages of the disclosed embodiments will be or will become apparent to one of ordinary skill in the art upon examination of the following figures and detailed description. It is intended that all such additional features and advantages be included within the scope of the disclosed embodiments. Further, the illustrated figures are only exemplary and are not intended to assert or imply any limitation with regard to the environment, architecture, design, or process in which different embodiments may be implemented.

As stated above, current algorithms that use a complicated numerical process for determining a phase envelope are too computationally expensive for use in a commercially viable petroleum reservoir simulator because the phase state (i.e., whether we have a single phase liquid, single phase vapor, of whether there are 2 phases coexisting) must be established in every single grid-block (of which there may be millions) and for every single time-step (of which there may be thousands). Thus, the disclosed embodiments enable the use a fast phase envelope calculation to (a) help set initial conditions during the numerical simulation of a petroleum reservoir, and (b) help to quickly identify the phase state of the fluids in a grid-block of a numerical simulation. In an embodiment, an approximate phase envelope may be generated for a grid-block in a reservoir simulation to further improve efficiency and simulation performance.

In an embodiment, the simulation may be based in part on production system data including various measurements collected downhole from a well drilled within each hydrocarbon reservoir, e.g., in the form of a production well for an oil and gas reservoir. Further, multiple production wells may be drilled for providing access to the reservoir fluids underground. Measured well data may be collected regularly from each production well to track changing conditions in the reservoir, as will be described in further detail below with respect to the production well examples illustrated in FIGS. 1A and 1B.

FIGS. 1A is a diagram of an exemplary production well 100A with a borehole 102 that has been drilled into a reservoir formation. Borehole 102 may be drilled to any depth and in any direction within the formation. For example, borehole 102 may be drilled to ten thousand feet or more in depth and further, may be steered horizontally for any distance through the formation, as desired for a particular implementation. The production well 100A also includes a casing header 104 and a casing 106, both secured into place by cement 103. A blowout preventer (BOP) 108 couples to casing header 104 and a production wellhead 110, which together seal in the well head and enable fluids to be extracted from the well in a safe and controlled manner.

Measured well data may be periodically sampled and collected from the production well 100A and combined with measurements from other wells within a reservoir, enabling the overall state of the reservoir to be monitored and assessed. These measurements may be taken using a number of different downhole and surface instruments, including but not limited to, a temperature and pressure sensor 118 and a flow meter 120. Additional devices may also be coupled in-line to a production tubing 112 including, for example, a downhole choke 116 (e.g., for varying a level of fluid flow restriction), an electric submersible pump (ESP) 122 (e.g., for drawing in fluid flowing from perforations 125 outside ESP 122 and production tubing 112), an ESP motor 124 (e.g., for driving ESP 122), and a packer 114 (e.g., for isolating the production zone below the packer from the rest of well 100A). Additional surface measurement devices may be used to measure, for example, the tubing head pressure and the electrical power consumption of ESP motor 124.

FIG. 1B is a diagram showing an alternative embodiment of the production well 100A of FIG. 1A, which includes many of the same components as well 100A but has been adapted for artificial gas lift. As shown in FIG. 1B, a production well 100B further includes a gas lift injector mandrel 126 in addition to the above-described components of well 100A. In an embodiment, gas lift injector mandrel 126 is coupled in-line with production tubing 112 for controlling a flow of injected gas into a portion of production tubing 112 located above-ground or at the surface of the well near wellhead 110. Although not shown in FIG. 1B, the gas lift production well 100B may also include the same type of downhole and surface instruments as shown for production well 100A in FIG. 1A for providing the above-described measurements.

As shown in FIGS. 1A and 1B, each of the devices along production tubing 112 couples to a cable 128, which may be attached to an exterior portion of production tubing 112. Cable 128 may be used primarily to provide power to the devices to which it couples. Cable 128 also may be used to provide signal paths (e.g., electrical or optical paths), through which control signals may be directed from the surface to the downhole devices as well as telemetry signals from the downhole devices to the surface. The respective control and telemetry signals may be sent and received by a control unit 132 at the surface of the production well. Control unit 132 may be coupled to cable 128 through blowout preventer 108. In an embodiment, field personnel may use control unit 132 to control and monitor the downhole devices locally, e.g., via a user interface provided at a terminal or control panel integrated with control unit 132. Additionally or alternatively, the downhole devices may be controlled and monitored by a remote processing system 140. Processing system 140 may be used to provide various supervisory control and data acquisition (SCADA) functionality for the production wells associated with each reservoir in a field. For example, a remote operator may use processing system 140 to send appropriate commands for controlling wellsite operations to control unit 132. Communication between control unit 132 and processing system 140 may be via one or more communication networks, e.g., in the form of a wireless network (e.g., a cellular network), a wired network (e.g., a cabled connection to the Internet) or a combination of wireless and wired networks.

As shown in FIGS. 1A and 1B, processing system 140 may include a computing device 142 (e.g., a server) and a data storage device 144 (e.g., a database). Although only one computing device and one data storage device are shown in FIGS. 1A and 1B, it should be appreciated that processing system 140 may include additional computing devices and data storage devices. Computing device 142 may be implemented using any type of computing device having at least one processor, a memory and a networking interface capable of sending and receiving data to and from control unit 132 via a communication network. In an embodiment, computing device 142 may be a type of server. Examples of such a server include, but are not limited to, a web server, an application server, a proxy server, and a network server. In some implementations, computing device 142 may represent a group of computing devices in a server farm.

In an embodiment, control unit 132 may periodically send wellsite production data via a communication network to processing system 140 for processing and storage. Such wellsite production data may include, for example, production system measurements from various downhole devices, as described above. In some implementations, such production data may be sent using a remote terminal unit (RTU) of control unit 132. In an embodiment, data storage device 144 may be used to store the production data received from control unit 132. In an example, data storage device 144 may be used to store historical production data including a record of actual and simulated production system measurements obtained or calculated over a period of time, e.g., multiple simulation time-steps, as will be described in further detail below.

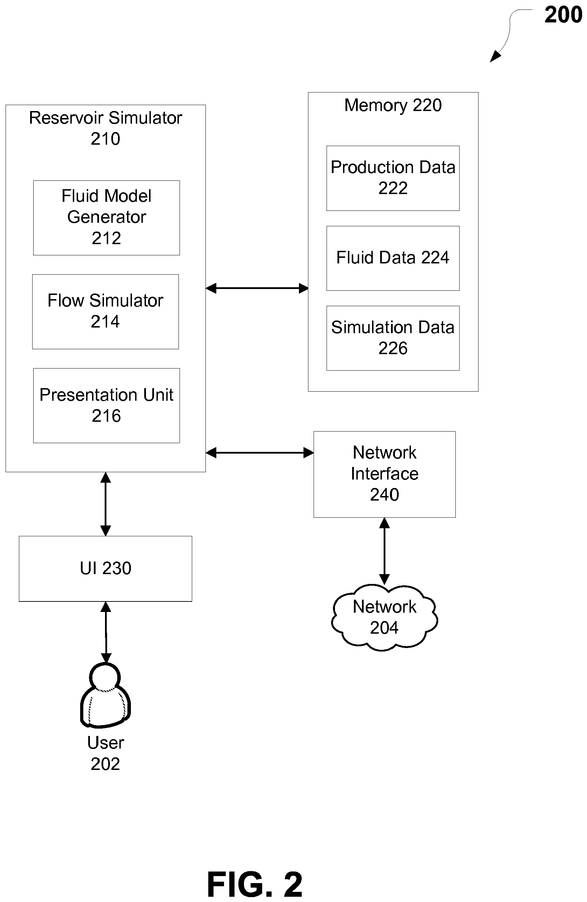

FIG. 2 is a block diagram of an exemplary system 200 for performing numerical simulations of different states of fluids a reservoir. For example, system 200 may be used to implement a processing system, e.g., processing system 140 of FIGS. 1A and 1B, as described above, for processing wellsite data sent by a surface control unit (e.g., control unit 132 of FIGS. 1A and 1B) of a production well associated with each reservoir in the production system. As shown in FIG. 2, system 200 includes a reservoir simulator 210, a memory 220, a user interface (UI) 230 and a network interface 240. Reservoir simulator 210 includes a fluid model generator 212, a flow simulator 214 and a data presentation unit 216. In an embodiment, reservoir simulator 210 and its components (including fluid model generator 212, flow simulator 214 and presentation unit 216), memory 220, UI 230 and network interface 240 may be communicatively coupled to one another via an internal bus of system 200.

In an embodiment, system 200 can be implemented using any type of computing device having at least one processor and a processor-readable storage medium for storing data and instructions executable by the processor. Examples of such a computing device include, but are not limited to, a desktop computer, a workstation, a server, a cluster of computers (e.g., in a server farm) or similar type of computing device. Such a computing device may also include an input/output (I/O) interface for receiving user input or commands via a user input device (not shown). The user input device may be, for example and without limitation, a mouse, a QWERTY or T9 keyboard, a touch-screen, a graphics tablet, or a microphone. The I/O interface may also include a display interface for outputting or presenting information on a display (not shown) coupled to or integrated with the computing device.

While only reservoir simulator 210, memory 220, UI 230 and network interface 240 are shown in FIG. 2, it should be appreciated that system 200 may include additional components, modules, and/or sub-components as desired for a particular implementation. It should also be appreciated that reservoir simulator 210 and its components may be implemented in software, firmware, hardware, or any combination thereof. Furthermore, it should be appreciated that embodiments of reservoir simulator 210, or portions thereof, can be implemented to run on any type of processing device including, but not limited to, a computer, workstation, embedded system, networked device, mobile device, or other type of processor or computer system capable of carrying out the functionality described herein.

In an embodiment, system 200 may use network interface 240 to communicate with different devices and other systems via a network 204. Network 204 can be any type of network or combination of networks used to communicate information between different computing devices. Network 204 can include, but is not limited to, a wired (e.g., Ethernet) or a wireless (e.g., Wi-Fi or mobile telecommunications) network. In addition, network 204 can include, but is not limited to, a local area network, medium area network, and/or wide area network such as the Internet.

In an embodiment, system 200 may use network interface 240 to send and receive information to and from a wellsite control and monitoring device, e.g., surface control unit 132 of FIGS. 1A and 1B, as described above, via network 204. Such information may include, for example, production system data sent from the wellsite control and monitoring device to system 200 via network 204. Likewise, various control signals and commands may be sent by system 200 to the wellsite control and monitoring device via network 204, e.g., for purposes of controlling wellsite operations or requesting wellsite production system data from the device. In some implementations, such control signals may be in the form of telemetry signals sent using a telemetry transceiver integrated within network information 240 of system 200.

In an embodiment, the control signals or commands sent by system 200 to the device at the wellsite may be based on input received from a user 202 via UI 230. User 202 may interact with UI 230 via a user input device (e.g., a mouse, keyboard, or touch-screen) and a display coupled to system 200 to configure, control or monitor the execution of production system simulation. In accordance with user input received by reservoir simulator 210 via UI 230, production system data may be requested and received from a wellsite control and monitoring device via network 204, as described above. The data received from the device may be processed and used by reservoir simulator 210 in the production system simulation. The results of the simulation may then be presented by presentation unit 216 to user 202 via UI 230.

In an embodiment, memory 220 may be used to store the production system data from the device in the above example in addition to various other types of data accessible by reservoir simulator 210 and its components (including fluid model generator 212, flow simulator 214 and presentation unit 216) for implementing the production system simulation functionality disclosed herein. Memory 220 can be any type of recording medium coupled to an integrated circuit that controls access to the recording medium. The recording medium can be, for example and without limitation, a semiconductor memory, a hard disk, or similar type of memory or storage device. In some implementations, memory 220 may be a remote cloud-based storage location accessible to system 200 via network interface 240 and network 204.

In the example shown in FIG. 2, the data stored in memory 220 may include production data 222, fluid data 224 and simulation data 226. As will be described in further detail below, reservoir simulator 210 may use a combination of production data 222, fluid data 224 and simulation data 226 to derive a desired set of operating points for a given time-step of the production system simulation.

Production data 222 may include, for example, actual and/or simulated production system measurements. Actual production system measurements may include, for example, surface and downhole well measurements from various production wells in the multi-reservoir system. Such measurements may include, but are not limited to, pressure, temperature and fluid flow measurements taken downhole near the well perforations, along the production string, at the wellhead and within the gathering network prior to the point where the fluids mix with fluids from other reservoirs. Likewise, the simulated measurements may include, for example and without limitation, estimates of pressure, temperature and fluid flow. Such estimates may be determined based on, for example, simulation results from one or more previous time-steps.

Fluid data 224 may represent different reservoir fluid components (e.g., heavy crude, light crude, methane, etc.) and related properties including, for example, their proportions, fluid density and viscosity for various compositions, pressures and temperatures, or other data. In an embodiment, fluid data 224 may be include EOS model data, e.g., in the form of one or more data tables, representing the fluids of each reservoir within the multi-reservoir production system.

In an embodiment, fluid model generator 212 may generate a fluid model for each reservoir in the multi-reservoir system based on corresponding production data 222 and fluid data 224. For example, fluid model generator 212 may determine parameters for each fluid component or group of components of the reservoir based on actual and simulated production system measurements (e.g., from one or more prior simulation time-steps) and fluid component characterizations associated with each reservoir. The resulting model for each component/group can then be applied to known state variables to calculate unknown state variables at each simulation point or "grid-block" within the reservoir, at the wellbore perforations or "sandface," and within the common gathering network of the production system. These unknown variables may include, for example and without limitation, each grid-block' s liquid volume fraction, solution gas-oil ratio and formation volume factor.

In an embodiment, the resulting fluid component state variables, both measured and calculated, may be provided as inputs to flow simulator 214 for simulating the flow of fluids through the multi-reservoir production system. Additional inputs to flow simulator 214 may include, for example, various floating parameters, fixed parameters and characterization data related to the production system and constraints thereof. The floating parameters may include, for example, various enhanced oil recovery (EOR) parameters including, but not limited to, gas lift injection rates, reservoir gas injection rates and reservoir liquid injection rates. Examples of fixed parameters may include facility constraints (e.g., a production capacity limit) and default production rates for individual wells. Reservoir characterization data may include, for example, geological data describing reservoir formations (e.g., log data previously collected during drilling and/or prior logging of the well) and formation characteristics (e.g., porosity). The above-described fluid component state variables along with the other simulation inputs, parameters and production system constraints may be stored in memory 220 as simulation data 226.

In an embodiment, flow simulator 214 may employ any of various numerical analysis techniques (e.g., a Michelsen technique) to determine a set of initial conditions for each grid-block. Such techniques also may be used to identify or update the phase state of the fluids in a grid-block during each simulation time-step. The simulation performed by flow simulator 214 may be repeated for each of a plurality of different time-steps, where the simulation results for a given time-step are used to update the simulation model for the next time-step.

As described above, the volume of the reservoir in the simulation model may be divided into discrete grid-blocks. Within each grid-block, thermodynamic equilibrium is assumed, and the conditions of each grid-block must be established. This means that the average temperature, pressure, and amount of mass of each individual component must be established. Additionally, other thermodynamic information is desired by the user, such as the saturation pressure (the pressure at which a single phase system becomes a two-phase system), and the amount of liquid hydrocarbon and vapor hydrocarbon phase, and the composition of each of these phases.

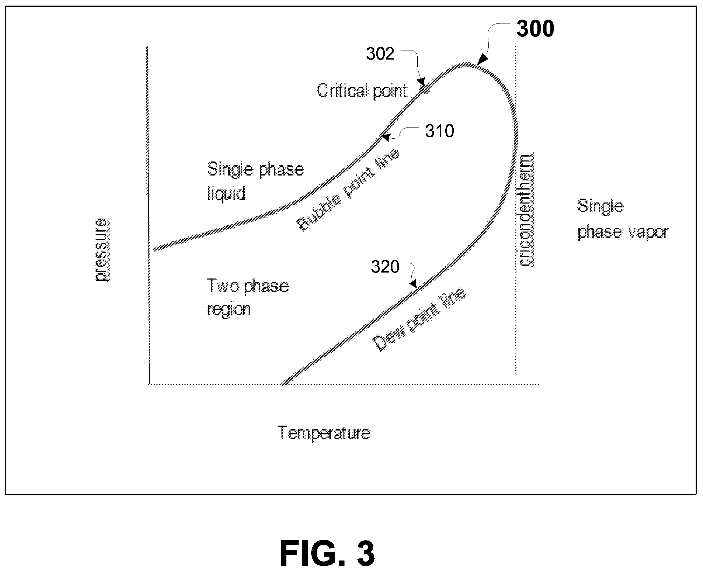

Given a fluid with a particular overall composition at a given temperature and pressure, a phase envelope may be generated. An example of a two-phase envelope 300 for a particular overall composition is shown in FIG. 3. In this example, it is assumed that the water phase is not in equilibrium with the hydrocarbons, and that there is either one or two hydrocarbon phases present in any given grid-block. As shown in FIG. 3, phase envelope 300 delineates regions of different phase states. To the left of the envelope, e.g., in a region where the temperatures are below a critical temperature point 302, the fluid is a single phase liquid. To the right of the envelope, e.g., in another region at which temperatures are above the critical temperature, the fluid is a single phase vapor. Within the two-phase envelope 300, the fluid may be composed of liquid and vapor in equilibrium. The pressure corresponding to a particular temperature on the phase envelope boundary is known as the saturation pressure. The phase envelope 300 is separated into two parts, a bubble point line 310 may represent saturation pressures below the critical temperature point 302 and a dew point line 320 may represent saturation pressures above the critical temperature point 302. Above the bubble point pressure, a single phase liquid exists, and below it, a two phase fluid exists. The region of temperature above the critical temperature point 302 may represent a retrograde region, in which a single phase vapor exists both above and below a saturation pressure at the same temperature. However, above a maximum temperature, known as the cricondentherm, only a single phase vapor exists.

For the purpose of initializing the reservoir simulation, within each grid-block, knowledge of the entire phase envelope is not required. By convention, only the saturation pressure is required. Robust algorithms have been developed to determine the saturation pressure. The calculation of the saturation pressure by an equation of state can be extremely difficult, especially in the proximity of the critical point 302. That is because the perfect solution to the saturation pressure problem is the so-called trivial solution (both liquid and vapor phases have compositions that are the same as the overall composition) During the initialization phase of the process, the calculation of the saturation pressure provides the state of the grid block as being a two-phase grid block (the grid-block pressure is less than the saturation pressure below the bubble point pressure, or between the upper and lower dew point pressures), a single phase liquid (a bubble point is found and the grid-block pressure is above the bubble point pressure), or a single phase vapor (a dew point is found, and the grid block pressure is either above or below the dew point pressure). Near the critical point 302, if the saturation pressure calculation fails, the reservoir simulator may also fail (unless some other provision to find the phase state is employed). Additionally, when the temperature is above the cricondentherm (i.e., the maximum temperature at which two phases can coexist), any saturation pressure calculation will also fail and the simulator may be unable to initialize. This is true of many reservoir simulators.

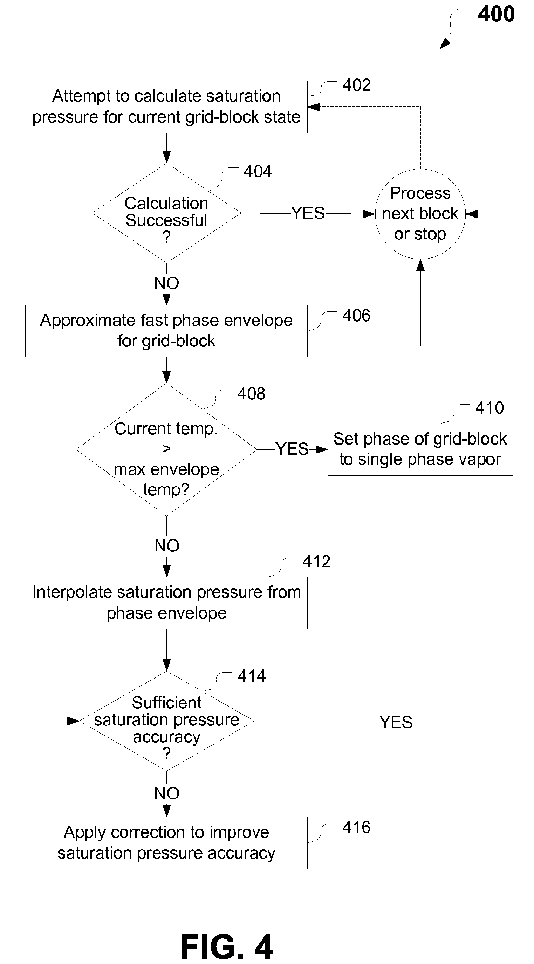

Both of the above problems can be avoided by the calculation of the phase envelope. However, in the past this has never been attempted before because it would be too computationally expensive. Thus, the disclosed embodiments provide a technique for generating a fast phase envelope that produces an approximate phase envelope, where the general shape of the envelope can be derived by calculation of the saturation pressure at a few select temperatures. While this may provide only an approximate solution, approximate values may be sufficient for the intended purpose of the simulation. As will be described in further detail below with respect to FIG. 4, it may be sufficient to interpolate a saturation pressure at a particular temperature between two calculated points, as long as the temperature is below the critical temperature or, even if the temperature is above the critical temperature, so long as the change in saturation pressure is monotonic with pressure.

FIG. 4 is a flowchart of an exemplary method 400 of using a fast phase envelope for simulating different phase states of fluids in a reservoir. As shown in FIG. 4, method 400 includes steps 402, 404, 406, 408, 410, 412, 414 and 416. However, it should be noted that method 400 may include additional steps to perform the techniques disclosed herein, as desired for a particular implementation. The steps of method 400 may be performed by a reservoir simulator, e.g., reservoir simulator 210 of FIG. 2, as described above, but method 400 is not intended to be limited thereto. The steps of method 400 in this example may be performed during an iteration or time-step of a simulation for processing each of plurality of grid-blocks in a simulation model. It may be assumed for each grid-block that only a single hydrocarbon phase exists and that changes in pressure and composition may cause the fluid corresponding to the grid-block to split into two hydrocarbon phases.

Method 400 begins in step 402, which includes attempting to calculate a saturation pressure for a state of the current grid-block at a given temperature and overall composition. In one embodiment, this calculation is performed at a predetermined point having a relatively low pressure and temperature so to simplify the calculation and improve efficiency. If it is determined in step 404 that the calculation of saturation pressure is successful, the calculated saturation pressure may then be used to determine the phase for the current grid-block and method 400 proceeds to the next grid-block in the simulation model for processing or stops if all grid-blocks have been processed. The steps of method 400 may be repeated for each remaining grid-block that needs to be processed.

As described above, the calculation of the saturation pressure by an equation of state can be extremely difficult, especially in the proximity of the critical point, and may fail for any number of reasons. If it is determined in step 404 that the calculation of saturation pressure in this example is not successful, method 400 proceeds to step 406, which includes approximating the fast phase envelope for the current grid-block. In an embodiment, an approximate phase envelope may be generated using a procedure described by Michelsen in 1994. This procedure may be extremely efficient, requiring the computational cost of a single saturation pressure calculation at a point distant from the critical point. When the saturation pressure calculation is performed from the critical point, only a few iterations (typically less than 10) are required for convergence. Also, the procedure is extremely robust, and guaranteed to yield an approximate point through interpolation at all temperatures. The calculation procedure is also extremely inexpensive because it only requires a derivative with respect to temperature, and not compositional derivatives. The compositional derivatives are expensive to calculate, and their usage would require a matrix multiplication. In this algorithm, only simple multiplications are required. The calculation also identifies the single phase state as being a liquid or a vapor.

Additionally, a relatively accurate measure of any error, ε, may be calculated. The disclosed embodiments may then use this estimate, and multiply it by the difference between the grid-block pressure and the estimated saturation pressure, to determine whether additional calculation is warranted. Michelsen provides a technique to improve the solution to whatever level is required if the solution is warranted. Also, the approximate solution yields an excellent starting guess for a full-blown saturation pressure calculation, so this can always be used if the exact answer is required. In most cases, even the use of only the initial approximate solution is within a few psi of the actual saturation pressure, and is more than good enough for most calculations. The greatest efficiency savings and improved robustness may be found near the critical point for reservoir calculations, and above the cricondentherm for both reservoir and surface network calculations. The use of the fast phase envelope technique may be significantly more robust and computationally efficient than conventional techniques in use today. However, the careful use of error estimates may play a big part in determining its final efficiency.

In step 408, it is determined whether or not the temperature of the current grid-block exceeds a predetermined maximum temperature of the envelope. If so, method 400 proceeds to step 410, in which the grid-block is initialized or set to a single phase vapor such that its composition is equal to the overall composition. The reason for this is that if the temperature is above the maximum temperature of the envelope, then it is known that the grid-block is in a single phase region and calculation of the saturation pressure is unnecessary. This also allows the disclosed embodiments to greatly reduce computational requirements of the simulation being performed. After step 410, method 400 may proceed to the next grid-block in the simulation model for processing or stop if all grid-blocks have been processed.

Alternatively, if the temperature does not exceed the maximum temperature of the envelope, method 400 proceeds to step 412, which includes interpolating an approximate solution for the saturation pressure at a desired temperature. It should be appreciated that any of various numerical analysis techniques may be used, which may involve constructing new data points within the range of a discrete set of known data points.

In step 414, it is determined whether or not the approximate answer for the saturation pressure is sufficiently accurate (e.g., whether the approximated saturation pressure for the grid-block is at a distance that is sufficiently away from the approximate envelope such that it is clearly in a certain phase region). In one embodiment, step 414 may include performing an accurate calculation at least once to establish a tolerance limit (e.g., a threshold distance that is sufficiently away from the approximate envelope). Alternatively, or in addition to, the tolerance may be set by a user (e.g., user 202 of reservoir simulator 210 of FIG. 2, as described above), based on prior analysis of a system and/or fluid type. For example, in some systems, the tolerance may be 5 psi, whereas in another system, the tolerance may be 15 psi.

If it is determined in step 414 that the approximate answer for the saturation pressure is accurate enough, method 400 may proceed to the next grid-block to be processed or stop if all blocks have been processed. Otherwise, method 400 proceeds to step 416, which includes applying a correction factor to improve the accuracy of the approximated saturation pressure. Method 400 may then repeat the determination in step 414 and the correction applied in step 416 any number of times until the desired accuracy of the saturation pressure has been reached.

An advantage of the disclosed embodiments relative to conventional techniques is that an actual value of the saturation pressure may not be required, for example, in cases where the fluid is highly under-saturated. Additional advantages of the disclosed embodiments over prior methods include increased computational efficiency and improved performance over conventional techniques. Because initialization is only done once during the simulation, the fast phase envelope techniques as disclosed herein are able to provide a relatively more efficient and robust capability for determining solution for determining fluid phase states relative to conventional rigorous phase envelope calculations, in which the solution of the saturation pressure is calculated over multiple simulation time-steps. The disclosed embodiments are particularly advantageous for numerical simulations, where the efficiency of the disclosed fast phase envelope techniques may be needed to reduce simulation time and thereby provide a more commercially viable option for determining phase states during numerical reservoir simulations relative to conventional techniques.

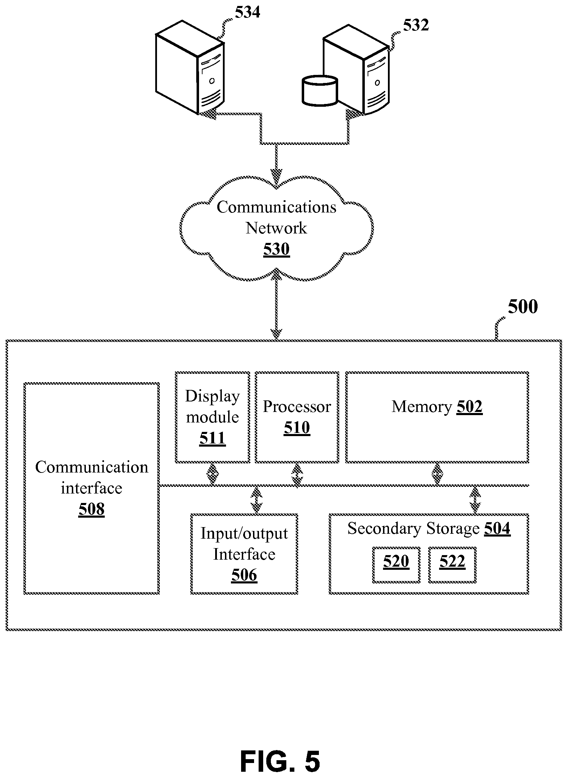

FIG. 5 is a block diagram of an exemplary computer system 500 in which embodiments of the present disclosure may be implemented. For example, system 500 may be used to implement system 200 of FIG. 2, as described above. The system 500 may be any type of computing device including, but not limited to, a desktop computer, a laptop, a server, a tablet, and a mobile device. The system 500 includes, among other components, a processor 510, main memory 502, secondary storage unit 504, an input/output interface module 506, and a communication interface module 508.

The processor 510 may be any type or any number of single core or multi-core processors capable of executing instructions for performing the features and functions of the disclosed embodiments. The input/output interface module 506 enables the system 500 to receive user input (e.g., from a keyboard and mouse) and output information to one or more devices such as, but not limited to, printers, external data storage devices, and audio speakers. The system 500 may optionally include a separate display module 511 to enable information to be displayed on an integrated or external display device. For instance, the display module 511 may include instructions or hardware (e.g., a graphics card or chip) for providing enhanced graphics, touchscreen, and/or multi-touch functionalities associated with one or more display devices.

Main memory 502 is volatile memory that stores currently executing instructions/data or instructions/data that are prefetched for execution. The secondary storage unit 504 is non-volatile memory for storing persistent data. The secondary storage unit 504 may be or include any type of data storage component such as a hard drive, a flash drive, or a memory card. In one embodiment, the secondary storage unit 504 stores the computer executable code/instructions and other relevant data for enabling a user to perform the features and functions of the disclosed embodiments.

For example, in accordance with the disclosed embodiments, the secondary storage unit 504 may permanently store executable code/instructions 520 for performing the steps of method 400 of FIG. 4, as described above. The executable code/instructions 520 are then loaded from the secondary storage unit 504 to main memory 502 during execution by the processor 510 for performing the disclosed embodiments. In addition, the secondary storage unit 504 may store other executable code/instructions and data 522 such as, but not limited to, a reservoir simulation application (e.g., a reservoir simulation application) for use with the disclosed embodiments.

The communication interface module 508 enables the system 500 to communicate with the communications network 530. For example, the network interface module 508 may include a network interface card and/or a wireless transceiver for enabling the system 500 to send and receive data through the communications network 530 and/or directly with other devices.

The communications network 530 may be any type of network including a combination of one or more of the following networks: a wide area network, a local area network, one or more private networks, the Internet, a telephone network such as the public switched telephone network (PSTN), one or more cellular networks, and/or wireless data networks. The communications network 530 may include a plurality of network nodes (not depicted) such as routers, network access points/gateways, switches, DNS servers, proxy servers, and other network nodes for assisting in routing of data/communications between devices.

For example, in one embodiment, the system 500 may interact with one or more servers 534 or databases 532 for performing the features of the disclosed embodiments. For instance, the system 500 may query the database 532 for well log information for creating a reservoir model in accordance with the disclosed embodiments. Further, in certain embodiments, the system 500 may act as a server system for one or more client devices or a peer system for peer to peer communications or parallel processing with one or more devices/computing systems (e.g., clusters, grids).

As described above, embodiments of the present disclosure are particularly useful for determining phase states of fluids in a reservoir simulation. In one embodiment of the present disclosure, a computer-implemented method of simulating different phase states of fluids in a reservoir includes: approximating a phase envelope in response to a non-successful calculation of the saturation pressure; determining whether the given temperature is above a maximum temperature of the approximate phase envelope; setting the phase of the grid-block as a single phase vapor with a composition equal to the overall composition in response to a determination that the given temperature is above the maximum temperature of the approximate phase envelope; interpolating saturation pressure from the approximate phase envelope in response to a determination that the given temperature is not above the maximum temperature of the approximate phase envelope; determining whether the interpolated saturation pressure is within an accuracy tolerance range; and determining the phase state of the grid-block based on the interpolated saturation pressure in response to a determination that the interpolated saturation pressure is within the accuracy tolerance range.

In a further embodiment, the fast phase envelope is approximated during initialization of the reservoir simulation. In yet a further embodiment, the fast phase envelope is approximated during a time-step of the reservoir simulation. In yet a further embodiment, the fast phase envelope is approximated using a Michelsen technique. In yet a further embodiment, the accuracy tolerance range is based on user input. In yet a further embodiment, a calculation of the saturation pressure is attempted for a given temperature and overall composition associated with a phase of a grid-block. In yet a further embodiment, the method includes determining the phase of the grid-block based on the saturation pressure in response to a successful calculation of the saturation pressure. In yet a further embodiment, the phase of the grid-block is at least one of a two-phase grid block, a single phase liquid or a single phase vapor. In yet a further embodiment, the phase of the grid-block is a single phase liquid when the grid-block's pressure exceeds a bubble point pressure, and the phase of the grid-block is a single phase vapor when the grid-block's pressure is either above or below a dew point pressure.

In another embodiment of the present disclosure, a system for defining non-linear petrofacies for a reservoir simulation model includes at least one processor and a memory coupled to the processor has instructions stored therein, which when executed by the processor, cause the processor to perform functions, including functions to: approximate a phase envelope in response to a non-successful calculation of the saturation pressure; determine whether the given temperature is above a maximum temperature of the approximate phase envelope; set the phase of the grid-block as a single phase vapor with a composition equal to the overall composition in response to a determination that the given temperature is above the maximum temperature of the approximate phase envelope; interpolate saturation pressure from the approximate phase envelope in response to a determination that the given temperature is not above the maximum temperature of the approximate phase envelope; determine whether the interpolated saturation pressure is within an accuracy tolerance range; and determine the phase state of the grid-block based on the interpolated saturation pressure in response to a determination that the interpolated saturation pressure is within the accuracy tolerance range.

In yet another embodiment of the present disclosure, a computer-readable storage medium has instructions stored therein, which when executed by a computer cause the computer to perform a plurality of functions, including functions to: approximate a phase envelope in response to a non-successful calculation of the saturation pressure; determine whether the given temperature is above a maximum temperature of the approximate phase envelope; set the phase of the grid-block as a single phase vapor with a composition equal to the overall composition in response to a determination that the given temperature is above the maximum temperature of the approximate phase envelope; interpolate saturation pressure from the approximate phase envelope in response to a determination that the given temperature is not above the maximum temperature of the approximate phase envelope; determine whether the interpolated saturation pressure is within an accuracy tolerance range; and determine the phase state of the grid-block based on the interpolated saturation pressure in response to a determination that the interpolated saturation pressure is within the accuracy tolerance range.

While specific details about the above embodiments have been described, the above hardware and software descriptions are intended merely as example embodiments and are not intended to limit the structure or implementation of the disclosed embodiments. For instance, although many other internal components of the system 500 are not shown, those of ordinary skill in the art will appreciate that such components and their interconnection are well known.

In addition, certain aspects of the disclosed embodiments, as outlined above, may be embodied in software that is executed using one or more processing units/components. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives, optical or magnetic disks, and the like, which may provide storage at any time for the software programming.

Additionally, the flowchart and block diagrams in the figures illustrate the architecture, functionality, and operation of possible implementations of systems, methods and computer program products according to various embodiments of the present invention. It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The above specific example embodiments are not intended to limit the scope of the claims. The example embodiments may be modified by including, excluding, or combining one or more features or functions described in the disclosure.

## Claims

1. A computer-implemented method of simulating different phase states of fluids in a reservoir, the method comprising:
approximating (406) a phase envelope, in response to a non-successful calculation of saturation pressure when attempting to calculate (402) a saturation pressure for a state of a current grid-block for a given temperature and overall fluid composition;
determining (408) whether a given temperature is above a maximum temperature of the approximate phase envelope;
setting (410) a phase of the grid-block as a single phase vapor with a composition equal to the overall composition in response to a determination that the given temperature is above the maximum temperature of the approximate phase envelope;
interpolating (412) saturation pressure from the approximate phase envelope in response to a determination that the given temperature is not above the maximum temperature of the approximate phase envelope;
determining (414) whether the interpolated saturation pressure is within an accuracy tolerance range; and
determining the phase state of the grid-block based on the interpolated saturation pressure in response to a determination that the interpolated saturation pressure is within the accuracy tolerance range.

2. The method of claim 1, wherein the phase envelope is approximated during initialization of the reservoir simulation or is approximated during a time-step of the reservoir simulation or is approximated using a Michelsen technique.

3. The method of claim 1, wherein the accuracy tolerance range is based on user input.

4. The method of claim 1, wherein a calculation of the saturation pressure is attempted for the given temperature and overall composition associated with a phase of a grid-block.

5. The method of claim 4, further comprising:
determining the phase of the grid-block based on the saturation pressure in response to a successful calculation of the saturation pressure.

6. The method of claim 1, wherein the phase of the grid-block is at least one of a two-phase grid block, a single phase liquid or a single phase vapor.

7. The method of claim 6, wherein the phase of the grid-block is a single phase liquid when the grid-block's pressure exceeds a bubble point pressure, and the phase of the grid-block is a single phase vapor when the grid-block's pressure is either above or below a dew point pressure.

8. A system of simulating different phase states of fluids in a reservoir, the system comprising:
at least one processor (510); and
a memory (502) coupled to the processor having instructions (520) stored therein, which when executed by the processor, cause the processor to perform functions including functions to:approximate a phase envelope, in response to a non-successful calculation of saturation pressure when attempting to calculate (402) a saturation pressure for a state of a current grid-block for a given temperature and overall fluid composition;
determine whether a given temperature is above a maximum temperature of the approximate phase envelope;
set a phase of the grid-block as a single phase vapor with a composition equal to the overall composition in response to a determination that the given temperature is above the maximum temperature of the approximate phase envelope;
interpolate saturation pressure from the approximate phase envelope in response to a determination that the given temperature is not above the maximum temperature of the approximate phase envelope;
determine whether the interpolated saturation pressure is within an accuracy tolerance range; and
determine the phase state of the grid-block based on the interpolated saturation pressure in response to a determination that the interpolated saturation pressure is within the accuracy tolerance range.

9. The system of claim 8, wherein the phase envelope is approximated during initialization of the reservoir simulation or is approximated during a time-step of the reservoir simulation or is approximated using a Michelsen technique.

10. The system of claim 8, wherein the accuracy tolerance range is based on user input.

11. The system of claim 8, wherein a calculation of the saturation pressure is attempted for the given temperature and overall composition associated with a phase of a grid-block.

12. The system of claim 8, wherein the functions performed by the processor further include functions to determine the phase of the grid-block based on the saturation pressure in response to a successful calculation of the saturation pressure.

13. The system of claim 8, wherein the phase of the grid-block is at least one of a two-phase grid block, a single phase liquid or a single phase vapor.

14. A computer-readable storage medium having instructions stored therein, which when executed by a computer cause the computer to perform a plurality of functions, including functions to:
approximate a phase envelope, in response to a non-successful calculation of saturation pressure when attempting to calculate (402) a saturation pressure for a state of a current grid-block for a given temperature and overall fluid composition;
determine whether a given temperature is above a maximum temperature of the approximate phase envelope;
set a phase of the grid-block as a single phase vapor with a composition equal to the overall composition in response to a determination that the given temperature is above the maximum temperature of the approximate phase envelope;
interpolate saturation pressure from the approximate phase envelope in response to a determination that the given temperature is not above the maximum temperature of the approximate phase envelope;
determine whether the interpolated saturation pressure is within an accuracy tolerance range; and
determine the phase state of the grid-block based on the interpolated saturation pressure in response to a determination that the interpolated saturation pressure is within the accuracy tolerance range.

15. The computer-readable medium of claim 14, wherein the functions performed by the computer further include functions to determine the phase of the grid-block based on the saturation pressure in response to a successful calculation of the saturation pressure, preferably wherein the phase of the grid-block is at least one of a two-phase grid block, a single phase liquid or a single phase vapor.

## Patentansprüche

1. Computerimplementiertes Verfahren zum Simulieren von verschiedenen Phasenzuständen von Fluiden in einem Reservoir, wobei das Verfahren Folgendes umfasst:
Angleichen (406) einer Phasenhüllenkurve als Reaktion auf ein nichterfolgreiches Berechnen eines Sättigungsdrucks beim Versuch einen Sättigungsdruck für einen Zustand eines aktuellen Rasterblocks für eine Temperatur und eine Gesamtfluidzusammensetzung, die gegeben sind, zu berechnen (402) ;
Bestimmen (408), ob eine gegebene Temperatur oberhalb einer Maximaltemperatur der angeglichenen Phasenhüllenkurve liegt;
Einstellen (410) einer Phase des Rasterblocks als einen einphasigen Dampf mit einer Zusammensetzung, die gleich der Gesamtzusammensetzung ist, als Reaktion auf eine Bestimmung, dass die gegebene Temperatur über der Maximaltemperatur der angeglichenen Phasenhüllenkurve liegt;
Interpolieren (412) eines Sättigungsdrucks von der angeglichenen Phasenhüllenkurve als Reaktion auf eine Bestimmung, dass die gegebene Temperatur nicht oberhalb der Maximaltemperatur der angeglichenen Phasenhüllenkurve liegt;
Bestimmen (414), ob der interpolierte Sättigungsdruck innerhalb eines Genauigkeitstoleranzbereichs liegt; und
Bestimmen des Phasenzustands des Rasterblocks basierend auf dem interpolarisierten Sättigungsdruck als Reaktion auf eine Bestimmung, dass der interpolierte Sättigungsdruck innerhalb des Genauigkeitstoleranzbereichs liegt.

2. Verfahren nach Anspruch 1, wobei die Phasenhüllenkurve während einer Initialisierung der Reservoirsimulation angeglichen wird oder während eines Zeitschritts der Reservoirsimulation angeglichen wird oder unter Verwendung einer Michelsen-Technik angeglichen wird.

3. Verfahren nach Anspruch 1, wobei der Genauigkeitstoleranzbereich auf einer Benutzereingabe basiert.

4. Verfahren nach Anspruch 1, wobei eine Berechnung des Sättigungsdrucks für die Temperatur und Gesamtzusammensetzung versucht wird, die gegeben und mit einer Phase eines Rasterblocks assoziiert sind.

5. Verfahren nach Anspruch 4, ferner umfassend:
Bestimmen der Phase des Rasterblocks basierend auf dem Sättigungsdruck als Reaktion auf eine erfolgreiche Berechnung des Sättigungsdrucks.

6. Verfahren nach Anspruch 1, wobei die Phase des Rasterblocks mindestens eines ist von einem zweiphasigen Rasterblock, einer einphasigen Flüssigkeit oder einem einphasigen Dampf.

7. Verfahren nach Anspruch 6, wobei die Phase des Rasterblocks eine einphasige Flüssigkeit ist, wenn der Druck des Rasterblocks einen Siedepunktdruck überschreitet, und wobei die Phase des Rasterblocks ein einphasiger Dampf ist, wenn der Druck des Rasterblocks entweder oberhalb oder unterhalb eines Taupunktdrucks liegt.

8. System zum Simulieren von verschiedenen Phasenzuständen von Fluiden in einem Reservoir, wobei das System Folgendes umfasst:
mindestens einen Prozessor (510); und
einen Speicher (502), der an den Prozessor gekoppelt ist und darin gespeicherte Anweisungen (520) aufweist, die, wenn sie von dem Prozessor ausgeführt werden, den Prozessor dazu veranlassen, Funktionen durchzuführen, einschließlich Funktionen zum: Angleichen einer Phasenhüllenkurve als Reaktion auf ein nichterfolgreiches Berechnen von Sättigungsdruck beim Versuch einen Sättigungsdruck für einen Zustand eines aktuellen Rasterblocks für eine Temperatur und eine Gesamtfluidzusammensetzung, die gegeben sind, zu berechnen (402) ;
Bestimmen, ob eine gegebene Temperatur oberhalb einer Maximaltemperatur der angeglichenen Phasenhüllenkurve liegt;
Einstellen einer Phase des Rasterblocks als einen einphasigen Dampf mit einer Zusammensetzung, die gleich der Gesamtzusammensetzung ist, als Reaktion auf eine Bestimmung, dass die gegebene Temperatur oberhalb der Maximaltemperatur der angeglichenen Phasenhüllenkurve liegt;
Interpolieren eines Sättigungsdrucks von der angeglichenen Phasenhüllenkurve als Reaktion auf eine Bestimmung, dass die gegebene Temperatur nicht oberhalb der Maximaltemperatur der angeglichenen Phasenhüllenkurve liegt;
Bestimmen, ob der interpolierte Sättigungsdruck innerhalb eines Genauigkeitstoleranzbereichs liegt; und
Bestimmen des Phasenzustands des Rasterblocks basierend auf dem interpolierten Sättigungsdruck als Reaktion auf eine Bestimmung, dass der interpolierte Sättigungsdruck innerhalb des Genauigkeitstoleranzbereichs liegt.

9. System nach Anspruch 8, wobei die Phasenhüllenkurve während der Initialisierung der Reservoirsimulation angeglichen wird oder während eines Zeitschritts der Reservoirsimulation angeglichen wird oder unter Verwendung einer Michelsen-Technik angeglichen wird.

10. System nach Anspruch 8, wobei der Genauigkeitstoleranzbereich auf einer Benutzereingabe basiert.

11. System nach Anspruch 8, wobei eine Berechnung des Sättigungsdrucks für die Temperatur und Gesamtzusammensetzung versucht wird, die gegeben und mit einer Phase des Rasterblocks assoziiert sind.

12. System nach Anspruch 8, wobei die Funktionen, die durch den Prozessor durchgeführt werden, ferner Funktionen zum Bestimmen der Phase des Rasterblocks basierend auf dem Sättigungsdruck als Reaktion auf eine erfolgreiche Berechnung des Sättigungsdrucks einschließen.

13. System nach Anspruch 8, wobei die Phase des Rasterblocks mindestens eines ist von einem zweiphasigen Rasterblock, einer einphasigen Flüssigkeit oder einem einphasigen Dampf.

14. Computerlesbares Speichermedium, das darin gespeicherte Anweisungen aufweist, die, wenn sie von einem Computer ausgeführt werden, den Computer dazu veranlassen, eine Vielzahl von Funktionen durchzuführen, einschließlich Funktionen zum:
Angleichen einer Phasenhüllenkurve als Reaktion auf ein nichterfolgreiches Berechnen eines Sättigungsdrucks beim Versuch einen Sättigungsdruck für einen Zustand eines aktuellen Rasterblocks für eine Temperatur und eine Gesamtzusammensetzung, die gegeben sind, zu berechnen (402);
Bestimmen, ob eine gegebene Temperatur oberhalb einer Maximaltemperatur der angeglichenen Phasenhüllenkurve liegt;
Einstellen einer Phase des Rasterblocks als einen einphasigen Dampf mit einer Zusammensetzung, die gleich der Gesamtzusammensetzung ist, als Reaktion auf eine Bestimmung, dass die gegebene Temperatur oberhalb der Maximaltemperatur der angeglichenen Phasenhüllenkurve liegt;
Interpolieren eines Sättigungsdrucks von der angeglichenen Phasenhüllenkurve als Reaktion auf eine Bestimmung, dass die gegebene Temperatur nicht oberhalb der Maximaltemperatur der angeglichenen Phasenhüllenkurve liegt;
Bestimmen, ob der interpolierte Sättigungsdruck innerhalb eines Genauigkeitstoleranzbereichs liegt; und
Bestimmen des Phasenzustands des Rasterblocks basierend auf dem interpolierten Sättigungsdruck als Reaktion auf eine Bestimmung, dass der interpolierte Sättigungsdruck innerhalb des Genauigkeitstoleranzbereichs liegt.

15. Computerlesbares Medium nach Anspruch 14, wobei die Funktionen, die von dem Computer durchgeführt werden, ferner Funktionen zum Bestimmen der Phase des Rasterblocks basierend auf dem Sättigungsdruck als Reaktion auf eine erfolgreiche Berechnung des Sättigungsdrucks einschließen, wobei die Phase des Rasterblocks vorzugsweise mindestens eines ist von einem zweiphasigen Rasterblock, einer einphasigen Flüssigkeit oder einem einphasigen Dampf.

## Revendications

1. Procédé mis en oeuvre par ordinateur de simulation de différents états de phase de fluides dans un réservoir, le procédé comprenant :
l'approximation (406) d'une enveloppe de phase, en réponse à un calcul non réussi de pression de saturation lors d'une tentative de calcul (402) d'une pression de saturation pour un état d'un bloc de grille actuel pour une température donnée et une composition de fluide globale ;
le fait de déterminer (408) si une température donnée est supérieure à une température maximale de l'enveloppe de phase approximative ;
la définition (410) d'une phase du bloc de grille en tant que vapeur à phase unique avec une composition égale à la composition globale en réponse à une détermination que la température donnée est supérieure à la température maximale de l'enveloppe de phase approximative ;
l'interpolation (412) d'une pression de saturation à partir de l'enveloppe de phase approximative en réponse à une détermination que la température donnée n'est pas supérieure à la température maximale de l'enveloppe de phase approximative ;
le fait de déterminer (414) si la pression de saturation interpolée se trouve à l'intérieur d'une plage de tolérance de précision ; et
la détermination de l'état de phase du bloc de grille sur la base de la pression de saturation interpolée en réponse à une détermination que la pression de saturation interpolée se trouve à l'intérieur de la plage de tolérance de précision.

2. Procédé selon la revendication 1, dans lequel l'enveloppe de phase est approximée pendant l'initialisation de la simulation de réservoir ou est approximée pendant une étape temporelle de la simulation de réservoir ou est approximée à l'aide d'une technique de Michelsen.

3. Procédé selon la revendication 1, dans lequel la plage de tolérance de précision est basée sur une entrée d'utilisateur.

4. Procédé selon la revendication 1, dans lequel un calcul de la pression de saturation est tenté pour la température donnée et la composition globale associée à une phase d'un bloc de grille.

5. Procédé selon la revendication 4, comprenant en outre :
la détermination de la phase du bloc de grille sur la base de la pression de saturation en réponse à un calcul réussi de la pression de saturation.

6. Procédé selon la revendication 1, dans lequel la phase du bloc de grille est au moins l'un parmi un bloc de grille à deux phases, un liquide à phase unique ou une vapeur à phase unique.

7. Procédé selon la revendication 6, dans lequel la phase du bloc de grille est un liquide à phase unique lorsque la pression du bloc de grille dépasse une pression de point d'ébullition, et la phase du bloc de grille est une vapeur à phase unique lorsque la pression du bloc de grille est soit supérieure soit inférieure à une pression de point de rosée.

8. Système de simulation de différents états de phase de fluides dans un réservoir, le système comprenant :
au moins un processeur (510) ; et
une mémoire (502) couplée au processeur ayant des instructions (520) stockées à l'intérieur qui, lorsqu'elles sont exécutées par le processeur, amènent le processeur à réaliser des fonctions comprenant des fonctions pour : approximer une enveloppe de phase, en réponse à un calcul non réussi de pression de saturation lors d'une tentative de calcul (402) d'une pression de saturation pour un état d'un bloc de grille actuel pour une température donnée et une composition de fluide globale ;
déterminer si une température donnée est supérieure à une température maximale de l'enveloppe de phase approximative ;
définir une phase du bloc de grille en tant que vapeur à phase unique avec une composition égale à la composition globale en réponse à une détermination que la température donnée est supérieure à la température maximale de l'enveloppe de phase approximative ;
interpoler une pression de saturation à partir de l'enveloppe de phase approximative en réponse à une détermination que la température donnée n'est pas supérieure à la température maximale de l'enveloppe de phase approximative ;
déterminer si la pression de saturation interpolée se trouve à l'intérieur d'une plage de tolérance de précision ; et
déterminer l'état de phase du bloc de grille sur la base de la pression de saturation interpolée en réponse à une détermination que la pression de saturation interpolée se trouve à l'intérieur de la plage de tolérance de précision.

9. Système selon la revendication 8, dans lequel l'enveloppe de phase est approximée pendant l'initialisation de la simulation de réservoir ou est approximée pendant une étape temporelle de la simulation de réservoir ou est approximée à l'aide d'une technique de Michelsen.

10. Système selon la revendication 8, dans lequel la plage de tolérance de précision est basée sur une entrée d'utilisateur.

11. Système selon la revendication 8, dans lequel un calcul de la pression de saturation est tenté pour la température donnée et la composition globale associée à une phase d'un bloc de grille.

12. Système selon la revendication 8, dans lequel les fonctions réalisées par le processeur incluent en outre des fonctions pour déterminer la phase du bloc de grille sur la base de la pression de saturation en réponse à un calcul réussi de la pression de saturation.

13. Système selon la revendication 8, dans lequel la phase du bloc de grille est au moins l'un parmi un bloc de grille à deux phases, un liquide à phase unique ou une vapeur à phase unique.

14. Support de stockage lisible par ordinateur ayant des instructions stockées à l'intérieur qui, lorsqu'elles sont exécutées par un ordinateur, amènent l'ordinateur à réaliser une pluralité de fonctions, comprenant des fonctions pour :
approximer une enveloppe de phase, en réponse à un calcul non réussi de pression de saturation lors d'une tentative de calcul (402) d'une pression de saturation pour un état d'un bloc de grille actuel pour une température donnée et une composition de fluide globale ;
déterminer si une température donnée est supérieure à une température maximale de l'enveloppe de phase approximative ;
définir une phase du bloc de grille en tant que vapeur à phase unique avec une composition égale à la composition globale en réponse à une détermination que la température donnée est supérieure à la température maximale de l'enveloppe de phase approximative ;
interpoler une pression de saturation à partir de l'enveloppe de phase approximative en réponse à une détermination que la température donnée n'est pas supérieure à la température maximale de l'enveloppe de phase approximative ;
déterminer si la pression de saturation interpolée se trouve à l'intérieur d'une plage de tolérance de précision ; et
déterminer l'état de phase du bloc de grille sur la base de la pression de saturation interpolée en réponse à une détermination que la pression de saturation interpolée se trouve à l'intérieur de la plage de tolérance de précision.

15. Support lisible par ordinateur selon la revendication 14, dans lequel les fonctions réalisées par l'ordinateur incluent en outre des fonctions pour déterminer la phase du bloc de grille sur la base de la pression de saturation en réponse à un calcul réussi de la pression de saturation, de préférence dans lequel la phase du bloc de grille est au moins l'un parmi un bloc de grille à deux phases, un liquide à phase unique ou une vapeur à phase unique.
